# FASCICULE DE BREVET EUROPEEN

(11) **EP 2 879 818 B1**
(45) Date de publication et mention de la délivrance du brevet: **02.01.2019**
(21) Numéro de dépôt: 13744518.5
(22) Date de dépôt: 30.07.2013
(51) Int. Cl.: B22F 3/105, B29C 67/00

(54) **PROCEDE DE REALISATION D'UN OBJET TRIDIMENSIONNEL**
VERFAHREN ZUR HERSTELLUNG EINES DREIDIMENSIONALEN OBJEKTS
METHOD FOR PRODUCING A THREE-DIMENSIONAL OBJECT

(30) Priorité: 30.07.2012 FR 1257369
(43) Date de publication de la demande: 10.06.2015
(73) Titulaire: Phenix Systems, 63200 Riom (FR)
(72) Inventeur: TEULET, Patrick, F-63200 Riom (FR)
(74) Mandataire: Lavoix
(86) Numéro de dépôt international: PCT/EP2013/066021
(87) Numéro de publication internationale: WO 2014/020033

(56) Documents cités:
- EP-A1- 0 734 842
- EP-A1- 1 358 855
- DE-A1- 19 507 881
- DE-A1- 19 954 891
- US-A1- 2009 072 447
- US-A1- 2009 202 378
- US-A1- 2011 256 416

## Description

L'invention concerne un procédé de réalisation d'un objet tridimensionnel à partir d'une poudre ou d'un mélange de poudres par frittage, autrement appelé fusion laser, comprenant des étapes de fabrication consistant à déposer, compacter puis solidifier, en des zones prédéterminées, des couches successives de poudre.

Par poudre, on désigne ici un matériau pulvérulent composé d'un ou de plusieurs éléments ainsi qu'un mélange de plusieurs matériaux pulvérulents. Ces poudres peuvent être métalliques ou minérales, par exemple une poudre de céramique. Il est connu de réaliser des objets, de forme plus ou moins complexe, à partir d'une telle poudre en solidifiant par fusion sous l'effet de l'énergie thermique fournie par un laser certaines zones de la poudre préalablement étalée et compactée en une succession de couche mince. Par la suite, on désignera par les termes « frittage » ou « fusion laser » une telle solidification par traitement à l'aide d'un laser. Chaque couche de poudre est frittée, seulement au niveau des zones destinées à former l'objet fini, préalablement à l'étalement et au compactage de cette couche, et ainsi de suite, couche après couche.

Les procédés de réalisation d'objet tridimensionnel par frittage connus présentent l'inconvénient de devoir mettre en oeuvre une ou plusieurs étapes complémentaires, notamment d'usinage ou de découpe, afin de séparer l'objet tridimensionnel fabriqué de son plateau de fabrication, et/ou de procéder à des opérations de reprise d'usinage sur cet objet après séparation de son plateau de fabrication. Ces étapes complémentaires sont nécessaires pour satisfaire aux exigences dimensionnelles, géométriques et d'état de surface. En effet, les zones de l'objet tridimensionnel qui sont en contact avec le plateau de fabrication sont modifiées par la présence d'interfaces de maintien et de positionnement s'étendant entre l'objet tridimensionnel et le plateau de fabrication, formant ainsi support. Ces étapes complémentaires sont notamment effectuées à l'aide de machines d'usinage à commande numérique ou par découpe aux moyens d'électroérosion à fil.

Dans le cas où l'objet à fabriquer comporte des surfaces en contre-dépouille, c'est-à-dire orientées obliquement en direction du plateau de fabrication, celles-ci peuvent être de qualités dégradées, sinon il y a nécessité de les maintenir avec des supports, interfaces entre la surface en contre-dépouille et le plateau de fabrication.

Il est connu de DE-A-199 54 891 de supporter l'objet à fabriquer au moyen d'une structure de support, réalisée également par frittage, constituée d'alvéoles parallélépipédiques surmontées de tiges verticales à partir desquelles l'objet tridimensionnel est fabriqué. Le nombre relativement important de tiges de support est de nature à rendre malaisé le détachage de la structure de support et à causer des états de surface non satisfaisants de l'objet fabriqué.

C'est à ces inconvénients qu'entend plus particulièrement remédier l'invention en proposant un nouveau procédé de fabrication d'un objet tridimensionnel, permettant d'obtenir un objet tridimensionnel dont les caractéristiques géométriques, dimensionnelles et l'état de surface sont d'une qualité au moins équivalente ou supérieure par rapport aux objets fabriqués au moyen des procédés connus de l'état de la technique, et dont les supports peuvent être retirés sans difficulté particulière et en évitant des processus industriels élaborés.

A cet effet, l'invention concerne un procédé de réalisation d'un objet tridimensionnel à partir d'une poudre ou d'un mélange de poudre par frittage et/ou fusion laser, comprenant des étapes de fabrication consistants à déposer, compacter puis solidifier, en des zones prédéterminées, des couches successives de la poudre ou de mélange de poudres, comportant en outre les étapes suivantes :
a) préalablement à la mise en oeuvre des étapes de fabrication de l'objet tridimensionnel et depuis un plateau de fabrication, fabriquer par frittage ou fusion laser, un support dont la ou les surfaces orientées vers l'objet tridimensionnel à fabriquer sont respectivement homothétiques de surfaces en regard de l'objet tridimensionnel à fabriquer ;
b) fabriquer par frittage et/ou fusion laser au moins une lame pour supporter l'objet tridimensionnel à fabriquer sur le support fabriqué à l'étape a) ;
c) fabriquer par frittage et/ou fusion laser l'objet tridimensionnel à partir d'une surface supérieure de la ou chaque lame fabriquée à l'étape b) ;
d) lorsque la fabrication de l'objet tridimensionnel est terminée, détacher l'objet tridimensionnel du support par application d'un effort sur l'objet tridimensionnel ou sur le support, tendant à déplacer l'objet et le support l'un par rapport à l'autre jusqu'à rompre la ou les lames.

Grâce à l'invention, l'objet fabriqué est supporté par des lames à partir d'un support construit par frittage avant l'objet tridimensionnel, ce qui permet de réduire le nombre et la densité des éléments supportant le poids de l'objet fabriqué. L'extraction de l'objet est facilitée par la rupture mécanique des lames de support, obtenue par déplacement de l'objet et du support l'un par rapport à l'autre. Les opérations ultérieures de suppression des éléments supportant le poids de l'objet fini sont donc considérablement réduites et l'état de surface de l'objet fini en est amélioré.

Selon des aspects avantageux mais non obligatoires de l'invention, un tel procédé peut incorporer une ou plusieurs des caractéristiques suivantes, prises dans toute combinaison techniquement admissible :
- Avant l'étape d), ce procédé comprend une étape e) consistant à découper le support au voisinage de la ou de chaque lame.
- Avant l'étape d), ce procédé comprend une étape f) consistant séparer le support en plusieurs parties par des découpes qui sont pratiquées dans le support perpendiculairement au plateau de fabrication et qui présentent une épaisseur égale à la hauteur de la ou des lames.
- A l'étape b), on fabrique la ou chaque lame avec une hauteur correspondant à la hauteur de trois à sept des couches de poudre ou de mélange de poudres.
- La ou les lames sont fabriquées selon des plans perpendiculaires au plateau de fabrication.
- A l'étape d), l'effort est appliqué sur un élément de transmission d'efforts comprenant au moins une surface coopérant par complémentarité de formes avec une surface de l'objet tridimensionnel.
- Dans le cas où on fabrique plusieurs objets tridimensionnels présentant, dans un plan parallèle au plateau de fabrication, des aires croissantes, on fabrique, à l'étape b), un nombre croissant de lames respectives pour ces objets.
- Dans le cas où l'objet tridimensionnel comporte une ou plusieurs faces obliques par rapport au plateau de fabrication et orientées en direction de ce plateau de fabrication, les lames sont fabriquées dans l'alignement des intersections de ces faces entre elles et/ou avec les autres faces de l'objet tridimensionnel.
- Dans le cas où l'objet tridimensionnel comporte une ou plusieurs faces arrondies orientées vers le plateau de fabrication, les lames sont fabriquées dans l'alignement d'une ou de génératrices de cette ou ces faces arrondies qui sont les plus proches du plateau de fabrication.
- Dans le cas où l'objet tridimensionnel comprend une série de parois faisant, dans un plan parallèle au plateau de fabrication, des angles les unes par rapport aux autres, la ou chaque lame est fabriquée dans une zone où deux de ces parois se rejoignent.

L'invention sera mieux comprise et d'autres avantages de celle-ci apparaîtront plus clairement à la lumière de la description qui va suivre d'un mode de réalisation d'un procédé de fabrication d'un objet tridimensionnel conforme à son principe, et faite en se référant aux dessins annexés dans lesquels :
- la figure 1 est une vue en élévation d'un objet tridimensionnel au cours de sa fabrication selon le procédé conforme à l'invention,
- la figure 2 est une vue de l'objet de la figure 1, selon la flèche II,
- la figure 3 est une vue similaire à la figure 2, pour un deuxième type d'objet tridimensionnel,
- la figure 4 est une vue similaire aux figures 2 et 3, pour un troisième type d'objet tridimensionnel,
- la figure 5 est une vue en élévation similaire à la figure 1, pour un quatrième type d'objet,
- la figure 6 est une vue similaire aux figures 2 à 4, pour l'objet de la figure 5,
- la figure 7 est une vue de dessus selon la flèche VII, de l'objet des figures 5 et 6,
- la figure 8 est une vue en élévation similaire à la figure 1, pour un cinquième type d'objet.
- la figure 9 est une vue selon la flèche IX, de l'objet de la figure 8,
- la figure 10 est une vue similaire à la figure 8, pour un sixième type d'objet,
- la figure 11 est une vue selon la flèche XI, de l'objet de la figure 10,
- la figure 12 est une vue en coupe selon le plan XII-XII de l'objet des figures 10 et 11,
- la figure 13 est une vue en coupe selon le plan XIII-XIII de l'objet des figures 10 à 12, et
- les figures 14 et 15 sont des vues similaires à la figure 10, illustrant respectivement des variantes de l'objet des figures 10 à 13.

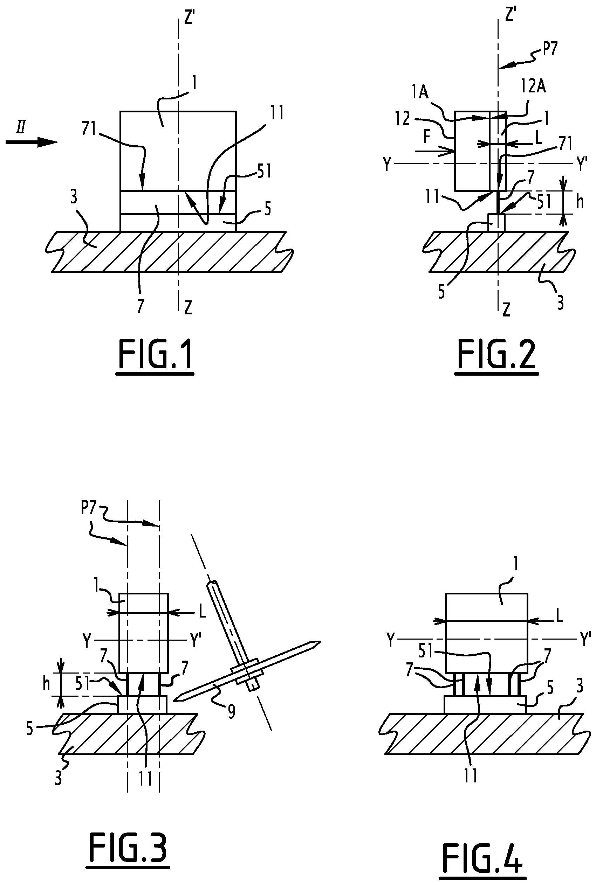

Les figures 1 à 13 illustrent schématiquement la réalisation d'un objet tridimensionnel 1 à partir d'une poudre ou d'un mélange de poudres, soit métallique(s) soit céramique(s). L'objet tridimensionnel 1 est fabriqué sur un plateau de fabrication 3, qui est horizontal et perpendiculaire à un axe vertical Z-Z'.

Préalablement à la fabrication de l'objet 1 proprement dite, un support 5 permettant de supporter l'objet 1 est préalablement fabriqué depuis le plateau 3, par frittage utilisant la même technique que pour la fabrication de l'objet 1, selon une méthode connue impliquant le dépôt, le compactage puis la solidification, en des zones prédéterminées, de couches successives de poudre. De préférence, le support 5 est formé par un ou plusieurs blocs continus de matière.

Le support 5 est fabriqué de manière que sa face supérieure 51, qui est destinée à être orientée vers l'objet 1, soit homothétique de la surface inférieure 11 de l'objet 1 à fabriquer, qui est en regard du support 5. Entre la surface 11 et la surface 51 s'étendent une ou plusieurs lames de support 7, selon des plans verticaux P7 parallèles à l'axe vertical Z-Z'. Les lames de support 7 sont fabriquées par frittage sur le support 5 depuis sa face supérieure 51, préalablement à la fabrication de l'objet 1.

Une fois les lames 7 fabriquées, l'objet 1 est fabriqué depuis les surfaces, supérieures 71 des lames de support 7, selon le processus de frittage classique précité. Une fois que la fabrication de l'objet tridimensionnel 1 est terminée, celui-ci repose par son poids dans sa position sur les lames 7, qui sont elles-mêmes supportées par le support 5. Les couches de poudre préalablement compactée les unes après les autres, bordant les faces des lames 7 contribuent également, dans une moindre mesure, au maintien de l'objet 1.

Les lames 7 permettent d'assurer une continuité thermique entre l'objet 1 et le support 5, tout en assurant une résistance mécanique suffisante au poids de l'objet lors de sa fabrication. Avantageusement, les lames de support 7 ont une épaisseur approximative d'un dixième de millimètre.

Pour retirer l'objet 1 du plateau de fabrication 3 lorsque sa fabrication est terminée, une force F est exercée sur l'objet 1, notamment selon une direction latérale sensiblement parallèle au plateau de fabrication 3. Ceci permet de briser les lames de support 7 en exerçant une contrainte de cisaillement dans les lames 7 et de désolidariser ainsi l'objet 1 du support 5.

Cette force peut éventuellement être appliquée sur l'objet 1 par l'intermédiaire d'un organe de transmission d'efforts 12, et permettant de transmettre la force de détachage F sans accidentellement abîmer la surface de l'objet 1. Comme représenté à la figure 2, cet organe présente une forme complémentaire de celle de l'objet fini 1, et permet l'application de la force de détachage F par coopération de surfaces, par exemple entre une surface plane latérale 1A de l'objet 1, et une surface latérale plane 12A de l'organe de transmission 12.

Comme représenté aux figures 1 à 4, le nombre de lames de support 7 construites préalablement à la fabrication de l'objet 1 est avantageusement proportionnel à l'aire couverte, dans un plan parallèle au plateau de fabrication 3, par l'objet 1. Sur les figures 1 et 2, la largeur L de l'objet 1, selon un axe Y-Y' parallèle au plateau de fabrication 3 et perpendiculaire au plan défini par l'objet 1, est suffisamment faible pour qu'il puisse être supporté par une seule lame 7. L'objet 1 représenté à la figure 3 a une largeur L supérieure à celle de l'objet des figures 1 et 2, donc une aire plus importante, et est supporté par deux lames 7. L'objet représenté à la figure 4, qui est plus large que celui de la figure 3, couvre donc une aire plus importante et est supporté par deux paires de lames 7. Dans ce cas, les lames 7 de chaque paire sont de préférence séparées par une distance approximativement égale à 0,35 millimètres. Les lames peuvent également couvrir le périmètre total de l'objet 1.

Préalablement à l'application de la force F de détachage de l'objet 1, une amorce de rupture permettant de fragiliser les lames 7 peut être réalisée en découpant, par exemple au moyen d'une scie circulaire 9, tout ou partie des bords du support 5, comme montré par exemple sur la figure 3. Ce découpage est réalisé au voisinage de chaque lame 7, en particulier sensiblement parallèlement au plateau de fabrication 3. Cette opération est prévue pour entamer la matière de support 5 sur laquelle les lames 7 s'appuient, ce qui permet de faciliter le détachage de l'objet 1 et de réduire la force F nécessaire à la rupture des lames 7.

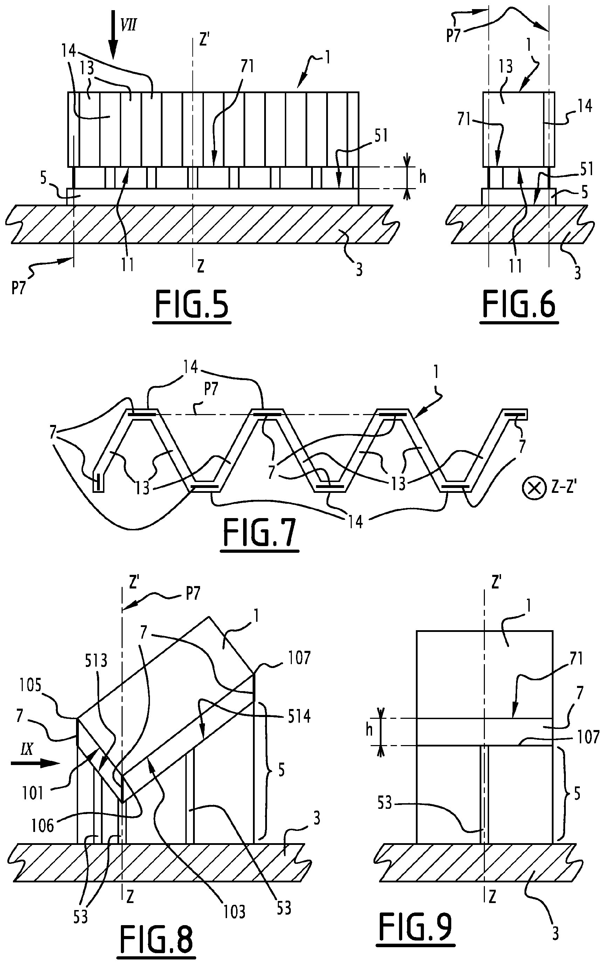

Les figures 5 à 13 décrivent des modes de réalisation de l'invention mis en oeuvre lors de la fabrication d'objets tridimensionnels 1 de formes complexes et/ou présentant des surfaces en contre-dépouille, c'est-à-dire obliques et orientées en direction du plateau de fabrication 3, comme c'est le cas pour les objets construits aux figures 8 et 9 et 10 à 13.

Les figures 5 à 7 représentent une fabrication d'une pièce comportant une série de plusieurs parois 13 perpendiculaires au plateau de fabrication 3 et formant des angles les unes par rapport aux autres. Pour que l'objet 1 soit facilement détachable du support 3, les lames 7 sont prévues dans les zones où les parois 13 se rejoignent deux à deux. Ceci évite d'obtenir des lames 7 dont la résistance serait trop importante, notamment au cas où les lames sont construites parallèlement aux parois 13 dans l'alignement de ces parois. Dans les zones où les parois 13 se rejoignent, l'objet 1 comporte des parois parallèles 14 parallèles entre elles situées sur des côtés alternés de l'objet 1. Dans ce cas, les lames de support 7 sont fabriquées dans l'alignement de ces parois 14, et sont donc également parallèles entre elles.

Dans le cas où l'objet fini 1 présente une forme complexe, et où sa géométrie ne permet pas l'application de la force F sur une seule surface plane, car cela aurait pour conséquence de possibles déformations de l'objet 1, l'organe 12 peut présenter une forme adaptée et non une forme telle que représentée à la figure 1. Dans le cas de l'objet 1 des figures 5 à 7, l'organe de transmission d'efforts 12 peut être fabriqué, éventuellement par frittage laser, de façon à présenter un profil complémentaire à celui de l'objet 1. De cette manière, la force F est exercée sur plusieurs surfaces de l'objet 1, notamment les surfaces verticales des parois 13 et 14, ce qui permet une application uniforme de la force F et évite les déformations de l'objet 1 lors de son extraction.

Les figures 8 et 9 représentent un objet 1 de forme parallélépipédique, fabriqué en étant positionné de façon à ce que deux de ses faces 101 et 103 soient en contre-dépouille, c'est-à-dire qu'elles sont dans une position oblique par rapport au plateau de fabrication 3 de manière à ce qu'elles forment un angle avec celui-ci, et soient orientées vers le plateau de fabrication 3.

Dans ce cas de fabrication, les lames de support 7 sont fabriquées dans l'alignement des arêtes 105, 106 et 107, qui constituent respectivement les intersections des faces 101 et 103 entre elles et avec les autres faces de l'objet 1. Les lames de support 7 s'étendent dans ce cas sur toute la largeur de l'objet 1, comme cela est représenté sur la figure 9.

Les surfaces supérieures 513 et 514 du support 5 sont homothétiques des surfaces 101 et 103, ce qui permet de garder une hauteur h constante des lames de support 7.

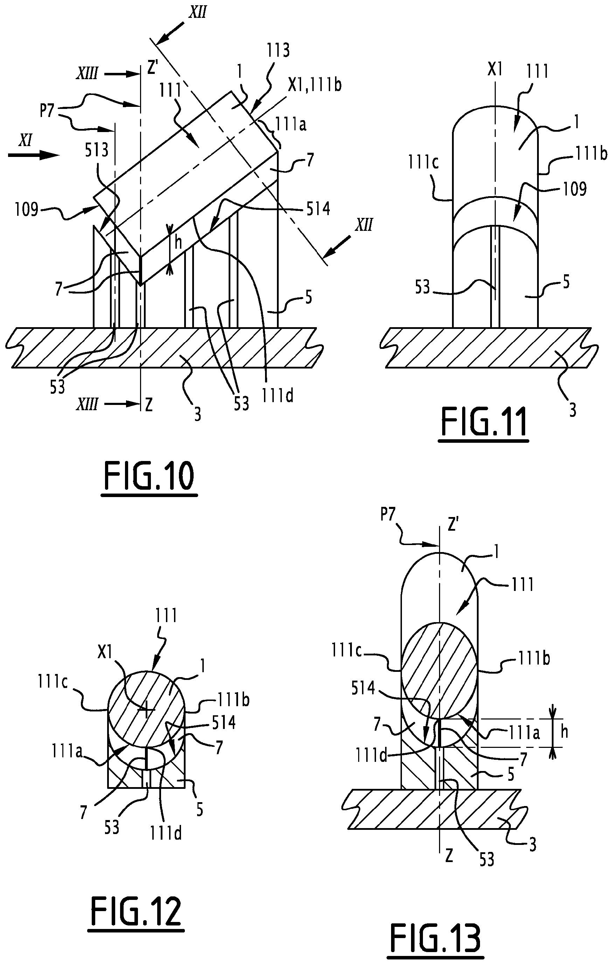

Les figures 10 à 13 représentent un objet 1 de forme cylindrique pleine, incluant une première face circulaire plane 109, une surface périphérique cylindrique 111 et une seconde surface circulaire plane 113. La face 109 constitue une surface en contre-dépouille. La partie inférieure 111a de la surface cylindrique 111, délimitée par les génératrices médianes 111b et 111c, qui sont des lignes parallèles à l'axe central X1 de l'objet 1 et passant par la surface 111, constitue également une surface en contre-dépouille.

Dans ce cas de fabrication, une des lames de support 7 est construite dans l'alignement de l'arête d'intersection entre la face 109 et la partie inférieure 111a de la surface 111.

Une autre lame de support 7 est construite dans l'alignement du point d'intersection entre la face 109 et la surface 111 le plus proche du plateau de fabrication 3. Cette lame de support 7 se prolonge le long de la surface 111 jusqu'aux génératrices 111b et 111c et présente une forme de couronne ovoïde visible à la figure 13.

L'objet 1 de forme cylindrique est également supporté par encore une autre lame 7, construite dans l'alignement d'une génératrice 111d de la surface cylindrique 111 qui est la plus proche du plateau de fabrication 3 selon l'axe Z-Z'. Cette lame de support 7 définit un plan qui coupe l'objet cylindrique 1 en son axe central X1 et le sépare en deux parties symétriques.

Les surfaces supérieures 513 et 514 du support 5 sont homothétiques de la face 109 et de la partie inférieure 111a de la surface cylindrique 111.

On notera que, en toute rigueur, la notion d'arête est une notion géométrique, à savoir c'est la courbe résultante de l'intersection de deux surfaces. Du point de vue mécanique ou pratique, la plupart du temps, l'intersection de deux surfaces fait appel à la présence d'un rayon de raccordement. Dans le cas par exemple où l'on a l'intersection entre une surface cylindrique à base circulaire et un plan qui est normal à cette surface cylindrique, l'intersection est un cercle ; dans la pratique, si on a un rayon de raccordement, la surface correspondante est une surface en forme de tuyau partiel ou tore partiel. Dans ce cas, on retiendra, pour localiser une lame support sur cette zone, une notion d'arête fictive : cette arête fictive passe par une des génératrices de la surface en forme de tore, qui a la particularité de contenir le ou les points les plus bas selon un axe vertical.

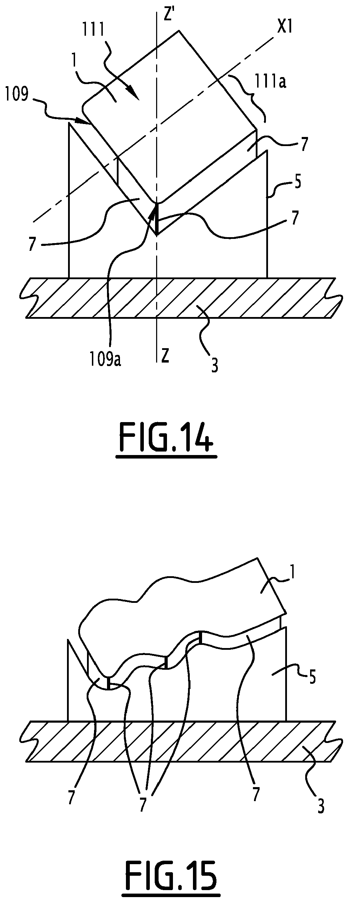

Pour illustrer cette notion, la figure 14 représente un objet 1 identique à celui des figures 10 à 13, à la différence que l'intersection entre la face 109 et la partie inférieure 111a de la surface cylindrique 111 de l'objet de la figure 14 présente une arête fictive 109a telle que définie plus haut, sur laquelle sont positionnées les lames 7 décrites plus haut en regard des figures 10 à 13.

Cette notion d'arête fictive peut s'étendre à toute surface qui n'aurait que des arêtes fictives sur lesquelles il sera nécessaire de positionner des lames de maintien. Ainsi, la figure 15 représente un objet 1 dont les surfaces en contre-dépouille sont dans ce cas.

Dans les différents cas de fabrication décrits ci-dessus, la hauteur h des lames de support 7, selon l'axe vertical Z-Z', correspond avantageusement à approximativement la hauteur de trois à sept couches de poudre telles qu'étalées et compactées pour la fabrication de l'objet 1 par frittage. Cette hauteur de lame permet une tenue mécanique suffisante pour résister au poids de l'objet 1 lors de sa fabrication. Cette hauteur h de lames 7 permet de laisser très peu de poudre non solidifiée sur les surfaces de l'objet 1 lorsque sa fabrication est terminée et que les lames 7 sont brisées. Le fait que les surfaces supérieures du support 5 soient homothétiques des surfaces inférieures de l'objet 1 permet de conserver des lames de support 7 de hauteur h constante.

La hauteur h permet aussi d'assurer une continuité thermique entre l'objet 1 et le support 5, afin d'éviter des défauts liés aux gradients thermiques qui peuvent apparaître dans les zones en contre-dépouille.

Comme représenté aux figures 8 à 13, le retrait de l'objet 1 fini peut être précédé de découpes 53 pratiquées dans le support 5, selon des plans perpendiculaires au plateau de fabrication 3. En pratique, ces découpes sont avantageusement réalisées lors de la fabrication par frittage du support 5. En fonction des dimensions de l'objet 1, plusieurs découpes 53 peuvent être effectuées selon des plans parallèles, et éventuellement d'autres découpes selon des plans perpendiculaires entre eux. Les figures 9 et 11 à 13 montrent notamment des découpes 53 pratiquées dans l'alignement de l'axe central X1 de l'objet 1 fabriqué sur ces figures. Dans tous les cas, les découpes 53 présentent une épaisseur, c'est-à-dire un écartement entre leurs bords respectifs, qui est sensiblement égale à la hauteur h des lames 7 : ainsi, ces découpes répartissent le support 5 en plusieurs fragments, entre lesquels ces découpes interrompent tout lien mécanique, sans ruiner l'effet global de maintien de l'objet 1, assuré par le support 5.

Dans les cas montrés sur les figures 8 à 13, le support 5 est par exemple, découpé horizontalement de manière à le détacher, avec l'objet fini 1 relié par les lames 7, du plateau de fabrication 3. Les différents fragments du support 5 peuvent ainsi être détachés un par un de l'objet 1 en rompant les lames 7, plus facilement que si le support 5 était détaché de l'objet 1 en une seule opération. Cette opération peut par exemple être réalisée en bloquant l'objet 1 dans un dispositif de maintien, puis en détachant les fragments de support au moyen d'une pince. Dans ce cas de figure, la force de détachage F n'est ainsi pas exercée sur l'objet 1 mais sur le support 5, de façon à rompre les lames 7 en exerçant une contrainte de cisaillement.

## Revendications

1. Procédé de réalisation d'un objet tridimensionnel (1) à partir d'une poudre ou d'un mélange de poudres par frittage et/ou fusion laser, comprenant des étapes de fabrication consistant à déposer, compacter puis solidifier, en des zones prédéterminées, des couches successives de la poudre ou du mélange de poudres, comportant en outre les étapes suivantes :
a) préalablement à la mise en oeuvre des étapes de fabrication de l'objet tridimensionnel (1) et depuis un plateau de fabrication (3), fabriquer par frittage et/ou fusion laser un support (5) dont la ou les surfaces (51 ; 513, 514) orientées vers l'objet tridimensionnel à fabriquer sont respectivement homothétiques de surfaces (11, 101, 103, 109, 111) en regard de l'objet tridimensionnel à fabriquer ;
b) fabriquer par frittage et/ou fusion laser au moins une lame (7) pour supporter l'objet tridimensionnel à fabriquer sur le support (5) fabriqué à l'étape a) ;
c) fabriquer l'objet tridimensionnel (1) depuis une surface supérieure (71) de la ou chaque lame (7) fabriquée à l'étape b) ; et
d) lorsque la fabrication de l'objet tridimensionnel (1) est terminée, détacher l'objet tridimensionnel du support (5) par application d'un effort (F) sur l'objet tridimensionnel ou sur le support, tendant à déplacer l'objet et le support l'un par rapport à l'autre jusqu'à rompre la ou les lames (7).

2. Procédé selon la revendication 1, **caractérisé en ce qu'**avant l'étape d), il comprend une étape e) consistant à découper le support (5) au voisinage de la ou de chaque lame (7).

3. Procédé selon l'une des revendications précédentes, **caractérisé en ce qu'**avant l'étape d), il comprend une étape f) consistant séparer le support (5) en plusieurs parties par des découpes (53) qui sont pratiquées dans le support (5) perpendiculairement au plateau de fabrication (3) et qui présentent une épaisseur égale à la hauteur (h) de la ou des lames (7).

4. Procédé selon l'une des revendications précédentes, **caractérisé en ce qu'**à l'étape b), on fabrique la ou chaque lame (7) avec une hauteur (h) correspondant à la hauteur de trois à sept des couches de poudre ou de mélange de poudres.

5. Procédé selon l'une des revendications précédentes, **caractérisé en ce que** la ou les lames (7) sont fabriquées selon des plans (P7) perpendiculaires au plateau de fabrication (3).

6. Procédé selon l'une des revendications précédentes, **caractérisé en ce qu'**à l'étape d), l'effort (F) est appliqué sur un élément (12) de transmission d'efforts comprenant au moins une surface (12A) coopérant par complémentarité de formes avec une surface (1A) de l'objet tridimensionnel (1)

7. Procédé selon l'une des revendications précédentes, **caractérisé en ce que** dans le cas où on fabrique plusieurs objets tridimensionnels (1) présentant, dans un plan parallèle au plateau de fabrication (3), des aires croissantes, on fabrique, à l'étape b), un nombre croissant de lames (7) respectives pour ces objets.

8. Procédé selon l'une des revendications précédentes, **caractérisé en ce que** dans le cas où l'objet tridimensionnel (1) comporte une ou plusieurs faces (101, 103 ; 109) obliques par rapport au plateau de fabrication (3) et orientées en direction de ce plateau de fabrication, les lames (7) sont fabriquées dans l'alignement des intersections (105, 106, 107 ; 109a) de ces faces entre elles et/ou avec les autres faces de l'objet tridimensionnel.

9. Procédé selon l'une des revendications précédentes, **caractérisé en ce que** dans le cas où l'objet tridimensionnel (1) comporte une ou plusieurs faces arrondies (111a) orientées vers le plateau de fabrication (3), les lames (7) sont fabriquées dans l'alignement d'une ou de génératrices (111d) de cette ou ces faces arrondies qui sont les plus proches du plateau de fabrication (3).

10. Procédé selon l'une des revendications précédentes, caractérisé en ce dans le cas où l'objet tridimensionnel (1) comprend une série de parois (13) faisant, dans un plan parallèle au plateau de fabrication (3), des angles les unes par rapport aux autres, la ou chaque lame (7) est fabriquée dans une zone (14) où deux de ces parois se rejoignent.

## Patentansprüche

1. Verfahren zur Herstellung eines dreidimensionalen Objekts (1) aus einem Pulver oder einer Pulvermischung durch Sintern und/oder Laserschmelzen, das Herstellungsschritte umfasst, die darin bestehen, in vorbestimmten Zonen aufeinanderfolgende Schichten des Pulvers oder der Pulvermischung aufzubringen, zu verdichten und dann zu verfestigen, wobei es außerdem die folgenden Schritte aufweist:
a) vor dem Durchführen der Herstellungsschritte des dreidimensionalen Objekts (1) und von einer Fertigungsplatte (3) aus, Herstellen eines Trägers (5) durch Sintern und/oder Laserschmelzen, dessen zum herzustellenden dreidimensionalen Objekt gerichtete(n) Fläche(n) (51; 513, 514) in Hinblick auf Flächen (11, 101, 103, 109, 111) des herzustellenden dreidimensionalen Objekts homothetisch sind;
b) Herstellen mindestens eines Kontaktstücks (7) zum Abstützen des herzustellenden dreidimensionalen Objekts auf dem in Schritt a) hergestellten Träger (5) durch Sintern und/oder Laserschmelzen;
c) Herstellen des dreidimensionalen Objekts (1) von der oberen Fläche (71) des oder jedes in Schritt b) hergestellten Kontaktstücks (7) aus; und
d) wenn die Herstellung des dreidimensionalen Objekts (1) beendet ist, Lösen des dreidimensionalen Objekts vom Träger (5) durch Aufbringen einer Kraft (F) auf das dreidimensionale Objekt oder auf den Träger mit dem Bemühen des Verrückens des Objekts und des Trägers zueinander bis zum Brechen des oder der Kontaktstücke (7).

2. Verfahren nach Anspruch 1, **dadurch gekennzeichnet, dass** es vor dem Schritt d) einen Schritt e) umfasst, der darin besteht, den Träger (5) benachbart zu dem oder jedem Kontaktstück (7) zu schneiden.

3. Verfahren nach einem der vorhergehenden Ansprüche, **dadurch gekennzeichnet, dass** es vor dem Schritt d) einen Schritt f) umfasst, der darin besteht, den Träger (5) in mehrere Teile durch Einschnitte (53), die in den Träger (5) senkrecht zur Fertigungsplatte (3) eingebracht werden und die eine Dicke gleich der Höhe (h) der Kontaktstück(n) (7) aufweisen, zu trennen.

4. Verfahren nach einem der vorhergehenden Ansprüche, **dadurch gekennzeichnet, dass** im Schritt b) das oder jedes Kontaktstück (7) mit einer Höhe (h) hergestellt wird, die der Höhe von drei bis sieben Schichten an Pulver oder Pulvermischung entspricht.

5. Verfahren nach einem der vorhergehenden Ansprüche, **dadurch gekennzeichnet, dass** das oder die Kontaktstücke (7) gemäß Ebenen (P7) hergestellt werden, die senkrecht zur Fertigungsplatte (3) liegen.

6. Verfahren nach einem der vorhergehenden Ansprüche, **dadurch gekennzeichnet, dass** im Schritt d) die Kraft (F) auf ein Element (12) zur Kraftübertragung aufgebracht wird, das mindestens eine Fläche (12A) umfasst, die durch Formenschluss mit einer Fläche (1A) des dreidimensionalen Objekts (1) zusammenarbeitet.

7. Verfahren nach einem der vorhergehenden Ansprüche, **dadurch gekennzeichnet, dass** in dem Fall, dass mehrere dreidimensionale Objekte (1) hergestellt werden, die in einer Ebene parallel zur Fertigungsplatte (3) steigende Flächen aufweisen, im Schritt b) eine ansteigende Anzahl von entsprechenden Kontaktstücken (7) für diese Objekte hergestellt wird.

8. Verfahren nach einem der vorhergehenden Ansprüche, **dadurch gekennzeichnet, dass** in dem Fall, dass das dreidimensionale Objekt (1) eine oder mehrere Flächen (101, 103; 109) aufweist, die in Bezug auf die Fertigungsplatte schräg und in Richtung zu dieser Fertigungsplatte gerichtet sind, die Kontaktstücke (7) in einer Ausrichtung der Schnittlinien (105, 106, 107; 109a) dieser Flächen untereinander und/oder mit anderen Flächen des dreidimensionalen Objekts hergestellt werden.

9. Verfahren nach einem der vorhergehenden Ansprüche, **dadurch gekennzeichnet, dass** in dem Fall, dass das dreidimensionale Objekt (1) eine oder mehrere abgerundete Flächen (111a) aufweist, die zu der Fertigungsplatte (3) gerichtet sind, die Kontaktstücke (7) in der Ausrichtung einer oder mehrerer Mantellinien (111d) dieser abgerundeten Fläche(n), die am nächsten zu der Fertigungsplatte (3) liegen, hergestellt werden.

10. Verfahren nach einem der vorhergehenden Ansprüche, **dadurch gekennzeichnet, dass** in dem Fall, dass das dreidimensionale Objekt (1) eine Reihe von Wänden (13) umfasst, die in einer Ebene parallel zur Fertigungsplatte (3) Winkel zueinander bilden, das oder jedes Kontaktstück (7) in einer Zone (14) hergestellt wird, in der zwei dieser Wände sich vereinigen.

## Claims

1. A method for producing a three-dimensional object (1) from a powder or from a mixture of powders by sintering and/or laser melting, comprising manufacturing steps consisting of depositing, compacting, then solidifying, in predetermined areas, successive layers of the powder or of the mixture of powders, further comprising the following steps:
a) before implementing the steps of manufacturing the three-dimensional object (1) and from a manufacturing table (3), manufacturing, by sintering and/or laser melting, a support (5) whereof the surface(s) (51; 513, 514) oriented toward the three-dimensional object to be manufactured are respectively homothetic to opposite surfaces (11, 101, 103, 109, 111) of the three-dimensional object to be manufactured;
b) manufacturing, by sintering and/or laser melting, at least one blade (7) for supporting the three-dimensional object to be manufactured on the support (5) manufactured in step a);
c) manufacturing the three-dimensional object (1) from an upper surface (71) of the or each blade (7) manufactured in step b);
d) when the manufacturing of the three-dimensional object (1) is complete, detaching the three-dimensional object from the support (5) by applying a force (F) to the three-dimensional object or to the support, moving the object and the support relative to one another until the blade(s) (7) break.

2. The method according to claim 1, **characterized in that** before step d), it comprises a step e) consisting of cutting the support (5) near the or each blade (7).

3. The method according to one of the preceding claims, **characterized in that** before step d), it comprises a step f) consisting of separating the support (5) into several parts by cuts (53) that are made in the support (5) perpendicular to the manufacturing table (3) and which have a thickness substantially equal to the height (h) of the blade(s) (7).

4. The method according to one of the preceding claims, **characterized in that** in step b), the or each blade (7) is manufactured with a height (h) corresponding to the height of three to seven layers of powder or mixture of powders.

5. The method according to one of the preceding claims, **characterized in that** the blade(s) (7) are manufactured in planes (P7) perpendicular to the manufacturing table (3).

6. The method according to one of the preceding claims, **characterized in that** in step d), the force (F) is applied on a force transmitting element (12) comprising at least one surface (12A) cooperating by shape matching with a surface (1A) of the three-dimensional object (1).

7. The method according to one of the preceding claims, **characterized in that** in the event several three-dimensional objects (1) are manufactured having increasing surface areas in a plane parallel to the manufacturing table (3), in step b) an increasing number of respective blades (7) is manufactured for those objects.

8. The method according to one of the preceding claims, **characterized in that** in the event the three-dimensional object (1) comprises one or more oblique faces (101, 103; 109) relative to the manufacturing table (3) and oriented toward the manufacturing table, the blades (7) are manufactured aligned with the intersections (105, 106, 107; 109a) of those faces with each other and/or with the other faces of the three-dimensional object.

9. The method according to one of the preceding claims, **characterized in that** in the event the three-dimensional object (1) comprises one or more rounded faces (111a) oriented toward the manufacturing table (3), the blades (7) are manufactured aligned with one or more generatrices (111d) of that or those rounded faces that are closest to the manufacturing table (3).

10. The method according to one of the preceding claims, **characterized in that** in the event the three-dimensional object (1) comprises a series of walls (13) forming angles relative to each other in a plane parallel to the manufacturing table (3), the or each blade (7) is manufactured in a zone (14) where two of those walls come together.
